# EUROPÄISCHE PATENTANMELDUNG

(11) **EP 1 349 037 A2**
(43) Veröffentlichungstag der Anmeldung: **01.10.2003**
(21) Anmeldenummer: 03007011.4
(22) Anmeldetag: 27.03.2003
(51) Int. Cl.: G06F 1/00

(54) **Verfahren zur Überwachung von Datenbewegungen**

(30) Priorität: 28.03.2002 DE 10214306
(71) Anmelder: Lindenblatt, Daniela, 68309 Mannheim (DE); Lindenblatt, Andreas, 68309 Mannheim (DE)
(72) Erfinder: Lindenblatt, Daniela, 68309 Mannheim (DE); Lindenblatt, Andreas, 68309 Mannheim (DE)
(74) Vertreter: Naumann, Ulrich, Dr.-Ing.

(57) **Zusammenfassung**

Ein Verfahren zur Überwachung von Datenbewegungen innerhalb eines EDV-Netzwerks, aus dem Netzwerk heraus und in das Netzwerk hinein, wobei die Datenbewegungen von einem netzwerkfremden Rechner detektiert werden, ist im Hinblick auf eine verbesserte Sicherheit des Netzwerks gegen unerlaubte Angriffe derart ausgestaltet, dass der netzwerkfremde Rechner mit dem zu überwachenden Netzwerk kommuniziert und Daten zur animierten Visualisierung der Datenbewegungen zur Verfügung stellt.

## Beschreibung

Die Erfindung betrifft ein Verfahren zur Überwachung von Datenbewegungen innerhalb eines EDV-Netzwerks, aus dem Netzwerk heraus und in das Netzwerk hinein, wobei die Datenbewegungen von einem netzwerkfremden Rechner detektiert werden.

Derartige Verfahren sind seit einiger Zeit aus der Praxis bekannt und angesichts der weiterhin zunehmenden Vernetzung und der steigenden Zahl von Internetbenutzern kommt ihnen eine stets wachsende Bedeutung zu. Viele Unternehmen verwenden Verfahren der eingangs genannten Art, um sich gegen Angriffe von außen zu schützen und unerlaubte Zugriffe auf firmeninterne Daten zu vermeiden. Gegen derartige Einbruchsversuche in interne Firmennetzwerke von außen, aber auch gegen Angriffsversuche von innen werden heutzutage in Ergänzung zu geeigneten Firewall-Architekturen beispielsweise sogenannte Intrusion Detection Systeme (IDS) eingesetzt. Diese Systeme sitzen quasi - an geeigneten Stellen - auf den Netzwerkverbindungen und hören den Netzwerkverkehr ab. Die Datenbewegungen werden annähernd in Echtzeit analysiert und anhand bestimmter Regeln, etwa durch Vergleich der Netzwerkpakete mit vordefinierten Mustern bzw. Signaturen, können etwaige Angriffe erkannt werden.

Vorgänge, die hinsichtlich der Sicherheit des Netzwerks als kritisch eingestuft werden, werden protokolliert, um den Vorgang möglichst lückenlos rekonstruieren zu können. Die ausführlichen Protokolldateien enthalten sämtliche relevanten Informationen über den kritischen Vorgang, wie beispielsweise Quell- und ZielAdressen, Quell- und Zielports, TCP-Flags, etc. Diese Dateien werden beispielsweise als Listen ausgedruckt, welche von dem zuständigen Personal (z.B. den Netzwerkadministratoren) in Bezug auf mögliche Sicherheitslücken und zu ergreifende Abwehrmaßnahmen weitergehend analysiert werden können.

Ein Problem der Verfahren wie sie heutzutage eingesetzt werden, besteht in dem teilweise sehr kryptischen Output des Überwachungssystems. Die bereits erwähnten Protokolldateien in Listenformat sind wenig anschaulich und es bedarf eines hohen Maßes an Fachwissen, um diese Listen richtig lesen und beurteilen zu können. Die in gewisser Weise langweilige und äußerst abstrakte Aufbereitung der Überwachungsergebnisse führt zum einen dazu, dass selbst Fachleute (Sicherheitspersonal bzw. Netzwerkadministratoren) sicherheitsrelevante und kritische Datenbewegungen leicht falsch beurteilen oder schlimmstenfalls gar Angriffe von außen übersehen. Zum anderen sind derartige Listen wenig hilfreich, um sämtliche Mitarbeiter eines Unternehmens, die in der Regel Laien auf dem Gebiet der Netzwerksicherheit sind, für dieses Thema zu sensibilisieren, und ihnen zu verdeutlichen, dass Anwenderfehler, wie z. B. unsachgemäße Installation von Programmen oder nachlässiger Umgang mit Passwörtern, ebenfalls ein erhebliches und nicht zu vernachlässigendes Risikopotential in sich bergen.

Der Erfindung liegt daher die Aufgabe zugrunde, ein Verfahren zur Überwachung von Datenbewegungen der eingangs genannten Art anzugeben, das den für die Netzwerksicherheit verantwortlichen Personen die Auswertung und die Beurteilung der detektierten Datenbewegungen erleichtert und darüber hinaus autorisierten Usern eines lokalen Netzwerks einen verständlichen und interessanten Zugang zum Thema Netzwerksicherheit ermöglicht.

Erfindungsgemäß wird die voranstehende Aufgabe durch ein Verfahren mit den Merkmalen des Patentanspruchs 1 gelöst. Danach ist das Verfahren derart ausgestaltet und weitergebildet, dass der netzwerkfremde Rechner mit dem zu überwachenden Netzwerk kommuniziert und Daten zur animierten Visualisierung der Datenbewegungen zur Verfügung stellt.

In erfindungsgemäßer Weise ist zunächst erkannt worden, dass der kryptische und nur dem Fachmann verständliche Output des Überwachungssystems z. B. in Protokolldateien eine Schwachstelle im Sicherheitskonzept eines Netzwerks darstellt, da sich bei der Auswertung der Ergebnislisten leicht Fehler einschleichen können. In weiter erfindungsgemäßer Weise ist erkannt worden, dass die detektierten Datenbewegungen nicht nur vom Sicherheitspersonal leichter analysiert werden können, sondern auch anderen autorisierten Usern fassbar und verständlich zugänglich gemacht werden können, wenn der die Datenbewegungen überwachende Rechner mit dem zu überwachenden Netzwerk kommuniziert und Daten zur animierten Visualisierung der Datenbewegung zur Verfügung stellt. Die Netzwerksicherheit kann auf diese Weise wirksam weiter erhöht werden.

Ein EDV-Netzwerk ist ein äußerst abstraktes Gebilde, insbesondere die darin ablaufenden Vorgänge und Datenbewegungen entziehen sich häufig der Vorstellung. Zur Veranschaulichung dieses Gebildes und insbesondere zur Sichtbarmachung der unsichtbaren Datenbewegungen können diese Datenbewegungen, das Netzwerk mit den einzelnen Rechnern und ihren Diensten sowie weitere Netzwerkkomponenten in vorteilhafter Weise als symbolische Grafiken abgebildet und auf einem Computermonitor dargestellt werden. Durch die symbolische Abbildung werden die nicht greifbaren Datenbewegungen in gewisser Weise zu etwas Gegenständlichem. Beispielsweise könnte das Netzwerk als Haus oder Burg abgebildet werden, wobei die einzelnen Zimmer den einzelnen Rechnern und Komponenten des Netzwerks entsprechen. Alternativ könnte das Netzwerk als Stadt abgebildet werden, wobei die einzelnen Gebäude den einzelnen Rechnern und Netzwerkkomponenten entsprechen. Denkbar wäre auch eine Abbildung des Netzwerks als Sphärensystem, als topologische Landkarte oder als Erdkugel, wobei die einzelnen Länder die einzelnen Rechner und Netzwerkkomponenten darstellen.

Zur Realisierung einer gewissen Systematik kann das Netzwerk mit den einzelnen Rechnern und ihren Diensten sowie weiteren Komponenten im Rahmen eines dreidimensionalen Gitters abgebildet werden. Die Eckpunkte dieses Gitters können dabei die einzelnen Rechner und die übrigen Netzwerkkomponenten repräsentieren. Für eine leichte Identifizierung der einzelnen Rechner innerhalb dieses dreidimensionalen Gitters kann in besonders vorteilhafter Weise die netzinterne Rechneradresse jedes Rechners als Koordinatenangabe verwendet werden.

Die Datenwege bzw. Datenpfade innerhalb des Netzwerks (z. B. vom zentralen Server zu den einzelnen Arbeitsplatzrechnern), in das Netzwerk hinein und aus dem Netzwerk heraus (z. B. zum nächsten Router) könnten mit Symbolen, die aus dem täglichen Leben bekannt sind, dargestellt werden. Hierbei kämen beispielsweise Straßen, Kabel, Rohrleitungen oder Flüsse in Frage. Innerhalb dieser Symbole könnten die Datenbewegungen in anschaulicher Weise beispielsweise als sich auf der Straße bewegende Autos oder als auf den Flüssen fahrende Schiffe dargestellt werden. In etwas einfacherer Form könnten die Datenbewegungen aber auch als sich fortsetzende Linie dargestellt werden.

Zur Aufdeckung von sicherheitskritischen Vorgängen können erlaubte und unerlaubte Datenbewegungen in unterschiedlicher Weise dargestellt werden. So könnten beispielsweise erlaubte Datenbewegungen durch eine sich fortsetzende durchgezogene Linie symbolisiert werden, während unerlaubte Datenbewegungen von einer sich fortsetzenden gestrichelten Linie repräsentiert werden. Vorstellbar wäre ebenfalls eine Differenzierung durch Verwendung unterschiedlicher Farben und/oder Formen.

Damit die für die Netzwerksicherheit innerhalb eines Unternehmens verantwortlichen Personen unmittelbar auf mögliche Angriffe reagieren und Gegenmaßnahmen einleiten können, könnte vorgesehen sein, dass beim Auftreten einer Anomalie innerhalb des üblichen Datenverkehrs ein Kontrollbildschirm (beispielsweise am Arbeitsplatz des Netzwerkadministrators) geöffnet bzw. aktiviert wird. Eine derartige Anomalie könnte beispielsweise in einem Zugriff von außen auf das Netzwerk oder in unerlaubten Datenbewegungen innerhalb des Netzwerks gesehen werden. Nach Öffnen bzw. Aktivieren des Kontrollbildschirms könnte die das Netzwerk abbildende grafische Benutzeroberfläche diejenigen Rechner, von denen unerlaubte Datenbewegungen ausgehen oder die Ziel von Datenbewegungen von außerhalb des Netzwerks sind, in besonderer Weise darstellen. Diese Rechner könnten beispielsweise farblich verändert, blinkend oder - im Fall von besonders gravierenden Ereignissen wie beispielsweise einer unerlaubten Änderung einer Systemdatei - explodierend dargestellt werden.

In besonders vorteilhafter Weise ist das Programm analog einem Computerspiel handhabbar bzw. bedienbar. Diese Ausführung des Programms, die quasi eine optische Verdichtung der Daten darstellt, erleichtert Laien auf dem Gebiet der Netzwerksicherheit den Zugang zu diesem Thema und eröffnet ihnen spielerisch einen Einblick in die Wichtigkeit eines effektiven Netzwerkschutzes.

Die spielerische Komponente des Programms wird insbesondere durch die Möglichkeit einer interaktiven Bedienbarkeit unterstützt. Eine wesentliche Interaktion könnte beispielsweise darin bestehen, dass nähere Informationen über einzelne Datenbewegungen, wie Herkunftsadressen, Zieladressen, Art und Menge der Daten etc., interaktiv besorgt, dargestellt, protokolliert und/oder ausgewertet werden können. In besonders vorteilhafter Weise können sogar eventuelle Gegenmaßnahmen interaktiv diskutiert bzw. bewertet werden, nämlich indem das Programm beispielsweise die aus einer bestimmten Gegenmaßnahme resultierenden Folgen durchspielt. Ist der User, beispielsweise der Netzwerkadministrator, mit den Auswirkungen bzw. den Folgen der vorgeschlagenen Gegenmaßnahmen einverstanden, so können diese Gegenmaßnahmen durchgeführt werden. Alternativ könnte das Verfahren auch so konzipiert sein, dass das Programm geeignete Gegenmaßnahmen automatisch ergreift.

Sämtliche Interaktionen, die das Programm bereitstellt, könnten mit der Maus oder einem sonstigen Peripheriegerät bedienbar sein. Die unterschiedlichen Aktionsmöglichkeiten könnten dabei beispielsweise in einem Status- oder Dialogfenster durch Mausklick auswählbar sein.

In manchen Fällen kann es notwendig sein, unmittelbar nach dem Auftreten ungewöhnlicher Datenbewegungen geeignete Maßnahmen zur Abwehr eines potentiellen Eindringlings zu ergreifen. Versucht beispielsweise ein Hacker in ein System einzudringen und bleibt dies zunächst für einen längeren Zeitraum unbemerkt, da die protokollierten Ereignisse z. B. routinemäßig nur morgens ausgewertet werden, so kann der Hacker in der Zwischenzeit bereits einen erheblichen Schaden angerichtet haben. Aus diesem Grunde ist daher vorgesehen, dass die Darstellung der Datenbewegungen in Echtzeit bzw. annähernd in Echtzeit erfolgt.

Ergänzend hierzu ist vorgesehen, dass die Darstellung der Datenbewegungen auch aus dem Speicher heraus zur beliebigen Wiederholung erfolgen kann. Dies kann z.B. hilfreich sein, wenn bestimmte Vorgänge mit Mitarbeitern, die zum unmittelbaren Zeitpunkt des Eingriffs nicht anwesend waren, besprochen werden müssen. Außerdem kann das Überwachungssystem anhand der Wiederholungen mit neuartigen Angriffssignaturen vertraut gemacht werden.

Zur Sicherstellung einer möglichst fehlerfreien Überwachung könnte das Programm in einem Ausführungsbeispiel ausschließlich zentral von einem Netzwerkadministrator handhabbar bzw. bedienbar sein. Im Falle eines kleineren Unternehmens, in dem hinsichtlich der Netzwerksicherheit keine ausreichend qualifizierten Mitarbeiter zur Verfügung stehen, könnte in einem weiteren Ausführungsbeispiel vorgesehen sein, dass das Programm vom zuständigen Provider handhabbar bzw. bedienbar ist. In Einzelfällen könnte beispielsweise aus Gründen einer größeren Transparenz das Programm auch von einzelnen autorisierten Usern direkt handhabbar bzw. bedienbar sein.

In einem weiteren Ausführungsbeispiel ist vorgesehen, dass das Programm eine Simulation beliebiger Szenarien mit den zugehörigen Datenbewegungen ermöglicht. Auf diese Weise könnten in anschaulicher und spielerischer Weise z.B. die Firewalls auf korrekte Einstellungen getestet werden, und es ist möglich, sich ein Gesamtbild über den Sicherheitszustand und eventuell vorhandene Sicherheitslücken zu verschaffen. Darüber hinaus können auch mögliche Abwehrmaßnahmen gegen unerlaubte Datenbewegungen - von außerhalb des Netzwerks oder innerhalb des Netzwerks - interaktiv simuliert und getestet werden. Diese Möglichkeiten der Simulation gestatten es in hervorragender Weise, Mitarbeiter in Sicherheitsfragen zu schulen und ihnen die Auswirkungen ihres - beabsichtigten oder in der Mehrzahl der Fälle unbeabsichtigten - Fehlverhaltens vor Augen zu führen.

Zur Prüfung der Zulässigkeit von Verbindungen, zur Vermeidung von Fremdangriffen auf eigene Rechner und zur Abwehr von potentiellen Angriffen ist es von höchster Wichtigkeit, sämtliche relevanten Datenbewegungen lückenlos zu detektieren. Dies geschieht mit Hilfe von Sensoren, wobei diese Sensoren Hardware und Software umfassen können. In einem besonderen Ausführungsbeispiel umfassen diese Sensoren ein IDS-System bzw. einen IDS-Rechner.

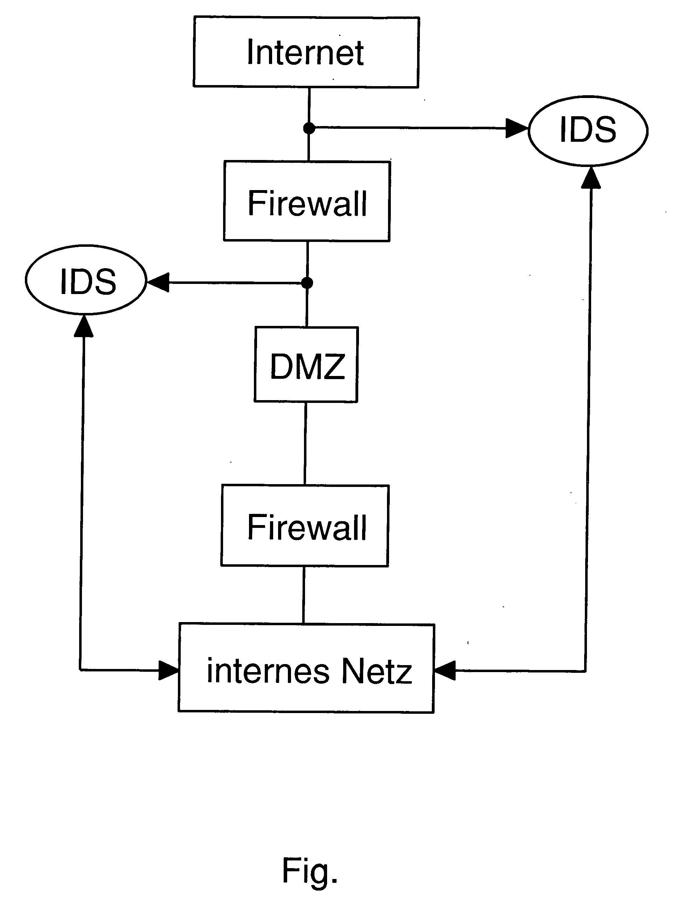

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die
- einzige Fig.: eine schematische Darstellung einer Sicherheitsarchitektur zum Schutz eines internen Netzwerks.

In der einzigen Figur ist beispielhaft ein mögliches Sicherheitskonzept für einen effektiven Schutz eines lokalen Netzwerks aufgezeigt. Dabei wird das interne Netzwerk durch eine DMZ vom Internet oder von einem sonstigen äußeren Netzwerk isoliert. Dieser Puffer - die sogenannte "Demilitarisierte Zone" - ist in der Regel ein Host, der beispielsweise den File-Server vor direkten Zugriffen von außen schützt. Zur Kanalisierung der Datenkommunikation zwischen lokalem und äußerem Netzwerk kann die DMZ - wie in der Fig. gezeigt - durch Firewall-Rechner ergänzt werden. Weiterhin zeigt die Fig. zwei Intrusion Detection Systeme (IDS), wobei in der dargestellten Ausführungsform ein erstes System den Datenverkehr vor der äußeren Firewall abhört, während ein zweites System Datenpakete hinter der äußeren Firewall detektiert. Die IDS-Rechner können mit dem internen Netzwerk kommunizieren und somit die Ergebnisdaten der Netzwerküberwachung dem internen Netzwerk zur Verfügung stellen. Diese Ergebnisdaten werden in symbolisch-anschaulicher Weise visualisiert und können interaktiv - ähnlich einem Computerspiel - weiter bearbeitet werden.

Abschließend sei besonders darauf hingewiesen, dass das voranstehend erörterte Ausführungsbeispiel lediglich zur Beschreibung der beanspruchten Lehre dient, diese jedoch nicht auf das Ausführungsbeispiel beschränkt.

## Patentansprüche

1. Verfahren zur Überwachung von Datenbewegungen innerhalb eines EDV-Netzwerks, aus dem Netzwerk heraus und in das Netzwerk hinein, wobei die Datenbewegungen von einem netzwerkfremden Rechner detektiert werden,
**dadurch gekennzeichnet, dass** der netzwerkfremde Rechner mit dem zu überwachenden Netzwerk kommuniziert und Daten zur animierten Visualisierung der Datenbewegungen zur Verfügung stellt.

2. Verfahren nach Anspruch 1, **dadurch gekennzeichnet, dass** die Datenbewegungen und das Netzwerk, d.h. die einzelnen Rechner und ihre Dienste sowie weitere Netzwerkkomponenten, in anschaulichen symbolischen Grafiken abgebildet werden und/oder dass das Netzwerk, d. h. die einzelnen Rechner und ihre Dienste sowie weitere Netzwerkkomponenten, als Haus, Burg, Stadt, Erdkugel, Sphärensystem, topologische Landkarte oder dergleichen abgebildet wird und/oder dass das Netzwerk, d.h. die einzelnen Rechner und ihre Dienste sowie weitere Netzwerkkomponenten, im Rahmen eines dreidimensionalen Gitters abgebildet wird, wobei netzinterne Rechneradresse jedes Rechners des Netzwerks als Koordinatenangabe zur Darstellung des Rechners in dem dreidimensionalen Gitter verwendet werden kann.

3. Verfahren nach Anspruch 1 oder 2, **dadurch gekennzeichnet, dass** die Datenwege/-Pfade innerhalb des Netzwerks, in das Netzwerk hinein und aus dem Netzwerk heraus als Straßen, Kabel, Rohrleitungen, Flüsse oder dergleichen abgebildet werden und/oder dass die Datenbewegungen entlang der Datenwege in symbolisch-anschaulicher Weise, etwa als sich auf der Straße bewegende Autos oder als sich fortsetzende Linien abgebildet werden.

4. Verfahren nach einem der Ansprüche 1 bis 3, **dadurch gekennzeichnet, dass** erlaubte und unerlaubte Datenbewegungen in unterschiedlicher Weise dargestellt werden, wobei erlaubte und unerlaubte Datenbewegungen in unterschiedlichen Farben und/oder Formen abgebildet werden können.

5. Verfahren nach einem der Ansprüche 1 bis 4, **dadurch gekennzeichnet, dass** diejenigen Rechner, Dienste und/oder Netzwerkkomponenten, von denen unerlaubte Datenbewegungen ausgehen oder die Ziel von Datenbewegungen von außerhalb des Netzwerks sind, in besonderer Weise dargestellt werden, wobei diejenigen Rechner, Dienste und/oder Netzwerkkomponenten, von denen unerlaubte Datenbewegungen ausgehen oder die Ziel von Datenbewegungen von außerhalb des Netzwerks sind, farblich verändert, blinkend oder explodierend dargestellt werden können.

6. Verfahren nach einem der Ansprüche 1 bis 5, **dadurch gekennzeichnet, dass** das Programm analog einem Computerspiel handhabbar bzw. bedienbar ist und/oder dass das Programm interaktiv handhabbar bzw. bedienbar ist und/oder dass das Programm mit der Maus oder mit einem sonstigen Peripheriegerät handhabbar bzw. bedienbar ist.

7. Verfahren nach einem der Ansprüche 1 bis 6, **dadurch gekennzeichnet, dass** Informationen über einzelne Datenbewegungen, wie Quell- und ZielAdressen, Art und Menge der Daten etc., interaktiv besorgt, dargestellt, protokolliert und/oder ausgewertet werden können.

8. Verfahren nach einem der Ansprüche 1 bis 7, **dadurch gekennzeichnet, dass** Gegenmaßnahmen interaktiv diskutiert, bewertet und ggf. durchgeführt werden können und/oder dass Gegenmaßnahmen automatisch ergriffen werden können.

9. Verfahren nach einem der Ansprüche 1 bis 8, **dadurch gekennzeichnet, dass** im Falle eines Zugriffs von außen auf das Netzwerk - erlaubt oder unerlaubt - und im Falle von unerlaubten Datenbewegungen innerhalb des Netzwerks ein Kontrollbildschirm geöffnet bzw. aktiviert wird.

10. Verfahren nach einem der Ansprüche 1 bis 9, **dadurch gekennzeichnet, dass** die Darstellung der Datenbewegungen in Echtzeit bzw. annähernd in Echtzeit erfolgt und/oder dass die Darstellung der Datenbewegungen aus dem Speicher heraus zur beliebigen Wiederholung erfolgt.

11. Verfahren nach einem der Ansprüche 1 bis 10, **dadurch gekennzeichnet, dass** beliebige Szenarien mit den zugehörigen Datenbewegungen und Zugriffen simuliert werden können, wobei mögliche Abwehrmaßnahmen gegen unerlaubte Datenbewegungen - von außerhalb des Netzwerks oder innerhalb des Netzwerks - interaktiv simuliert und getestet werden können.

12. Verfahren nach einem der Ansprüche 1 bis 11, **dadurch gekennzeichnet, dass** die Datenbewegungen mit Hilfe von Sensoren detektiert werden, wobei die Sensoren vorzugsweise Hardware und Software umfassen und ein IDS-System bzw. einen IDS-Rechner aufweisen können.
